# EUROPEAN PATENT SPECIFICATION

(11) **EP 0 671 653 B1**
(45) Date of publication and mention of the grant of the patent: **03.01.2001**
(21) Application number: 95301551.8
(22) Date of filing: 09.03.1995
(51) Int. Cl.: G03B 21/62, C09D 5/24

(54) **A light transmission screen and its manufacturing method**
Durchlicht-Projektionsschirm und sein Herstellungsverfahren
Ecran de projection par transparence et son procédé de fabrication

(30) Priority: 11.03.1994 JP 4124394
(43) Date of publication of application: 13.09.1995
(73) Proprietor: MATSUSHITA ELECTRIC INDUSTRIAL CO., LTD., Kadoma-shi, Osaka-fu, 571 (JP)
(72) Inventor: Mitani, Katsuaki, Ibaraki-shi, Osaka 567 (JP); Sakaguchi, Hirokazu, Toyonaka-shi, Osaka 560 (JP); Aoki, Satoshi, Kadoma-shi, Osaka 571 (JP)
(74) Representative: Crawford, Andrew Birkby

(56) References cited:
- EP-A- 0 447 603
- EP-A- 0 450 134
- EP-A- 0 511 650
- US-A- 5 066 099
- PATENT ABSTRACTS OF JAPAN vol. 017 no. 387 (P-1576) ,20 July 1993 & JP-A-05 066479 (HITACHI LTD) 19 March 1993,
- PATENT ABSTRACTS OF JAPAN vol. 007 no. 075 (P-187) ,29 March 1983 & JP-A-58 005724 (MATSUSHITA DENKI SANGYO KK) 13 January 1983,
- PATENT ABSTRACTS OF JAPAN vol. 018 no. 178 (P-1717) ,25 March 1994 & JP-A-05 341385 (MITSUBISHI RAYON CO LTD) 24 December 1993,
- PATENT ABSTRACTS OF JAPAN vol. 018 no. 288 (C-1207) ,2 June 1994 & JP-A-06 056478 (SUMITOMO CEMENT CO LTD) 1 March 1994,

## Description

### BACKGROUND OF THE INVENTION

### [Field of Application in Industry]

The present invention relates to a light transmission screen for use in the projection type television receivers.

### [Prior Art]

One example of the prior art relative to light transmission screens is disclosed in JP 58-059436 A. Its structures are illustrated in Fig. 17.

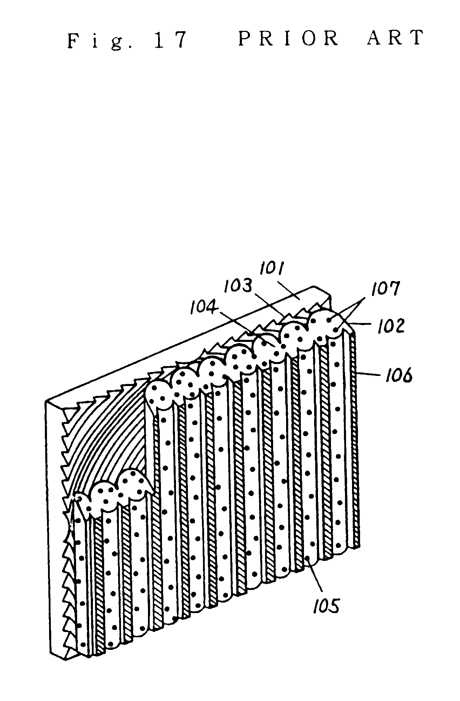

In Fig. 17 is shown a screen of two-sheet structures comprising a Fresnel lens sheet 101, which has Fresnel lenses 103 formed therein, and a lenticular lens sheet 102, which has incident light side lenticular lenses 104 and radiant light side lenticular lenses 105 formed therein, both being put together so that the latter is arranged on the front surface of the former.
The basic material of the foregoing lenticular lens sheet 102 contains fine particles of light diffusing 107 and also has its surface disposed with a light absorption layer 106.

The incident light side lenticular lenses 104 contribute to expanding the horizontal view angle and the radiant light side lenticular lenses 105 improve the color shift and color shading.

However, the foregoing structures present inherent problems of color shift and unevenness in color.

Also, a light transmission screen of three-sheet structures is proposed for the purpose of further improving picture quality as well as picture contrast.

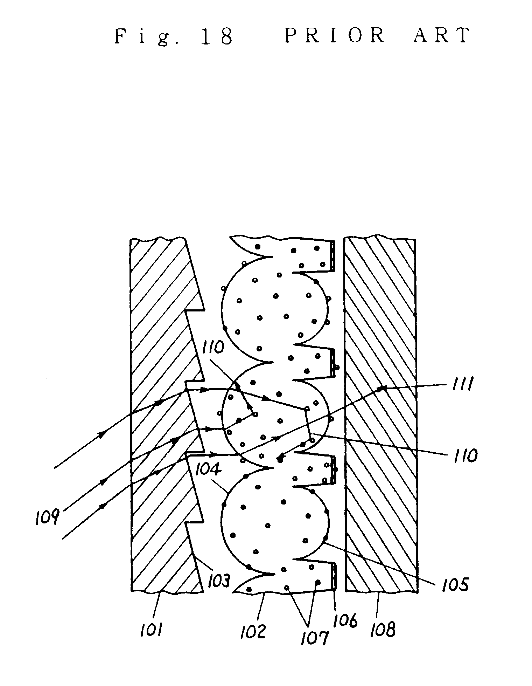

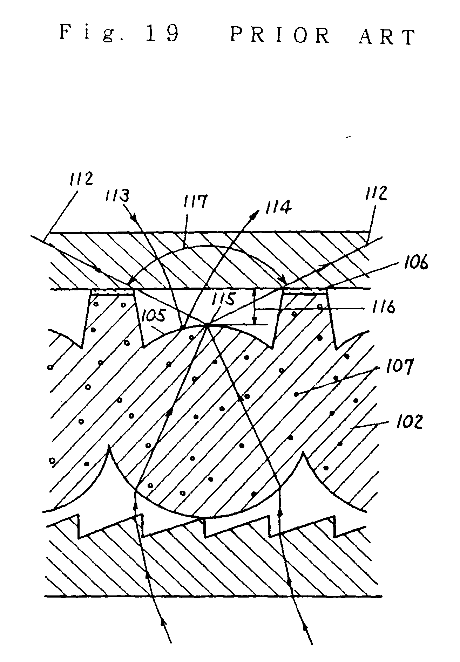

Fig. 18 is a cross-sectional view of the important portions of the prior art light transmission screen having three-sheet structures, and Fig. 19 is an illustration to explain the limitations involved with the view angle of the prior art screen.
In Fig. 18, a filter 108 or a smoked panel (not shown in Fig. 18) is arranged in front of the lenticular lens sheet 102.

The incident light 109 is divided into diffused reflection light 110 and transmission light beams 111.
Light diffusing fine particles 107 (referred to as diffusion material hereafter) are mixed in the basic material of the foregoing lenticular lens sheet 102 in order to expand the vertical view angle, and cylindrical lenticular lenses 104 and 105 are formed on each respective surface thereof for image focusing.

Further, in order to prevent picture contrast from degrading on account of external light, the non-focusing areas of the radiant light side lenticular lenses 105 are disposed with black stripes, each of which is formed of a projected external light absorption layer 106, arranged in a striped pattern having a specified uniform spacing between stripes.

A diffusion material 107 is mixed in the lenticular lens sheet 102 according to the aforementioned JP 58-059436 A. As a result, as shown in Fig. 18, all the incident light 109 does not constitute the transmission light with a part thereof diffused by the diffusion material 107, thereby producing stray light like the diffused reflection light 110.
Thus, deterioration in resolution power and dissipation in the amount of radiant light are caused, thereby bringing about the problem of reduced brightness.

Besides, according to JP 58-059436 A the incident light 109 is partially changed to diffused reflection light 110 during its passage through the incident light side lenticular lens 104 due to the existence of the diffusion material 107, and fails to focus 100% at the vicinity of the radiant light side lenticular lenses 105. (See Fig. 18.)
Consequently, the radiant light side lenticular lenses 105 usually end up with utilizing only about 70% of the incident light.

Therefore, some light not expected from the designed performance is radiated on account of the diffusion material 107, presenting a problem of adverse effects against the improvements in color shift and color shading.

In addition, as observed in Fig. 19, there is a difference in height 116 between the incident light side lenticular lens 105 and the projected external light absorption layer 106 of the non-focusing area.
As a result, since all the radiating light beams situated outside of the radiating light 112 that hits the edge of the projected external light absorption layer 106 is blocked by the edge, the picture image 115 focused on the diffusion material 107 is difficult to see for a viewer who is watching the screen either at the far right or left position. Accordingly, there is a certain limitation in expanding the horizontal view angle 117.

Besides, some of the diffusion material 107 are exposed on the surfaces of the cylindrical lenticular lens 105 and external light absorption layer 106.

Because of this, the surface of the lenticular lens 102 presents unevenness, and when external light 113 is irradiated on the radiant light side surface of the lenticular lens 102, an external light reflection 114 takes place, thereby causing the screen to look whitish with a resultant problem of deteriorated contrast.

Further, as shown in Fig. 18, a light absorbing filter 108 made of glass or plastic showing reduced light transmittance is provided for the purposes of improving brilliance in picture and contrast of picture degraded due to external light.

In this case, however, the contrast affected by external light may be improved, but the fundamental problems involving color shift, color shading and narrow view angles still remain to be solved.

Japanese Patent Application JP 50-066479 A disdoses a light transmission screen for expanding the vertical orientation characteristics of the screen while improving the focus characteristics and contrast of an image. The screen comprises a transparent Fresnel lens sheet and a light diffusion panel with a transparent lenticular lens sheet disposed therebetween. Light is diffused in the vertical direction mainly by the incident surface of the Fresnel lens sheet, the incidence surface of the light diffusion panel, or the lenticular lens sheet which has its length direction in the horizontal direction of the screen.

An object of the present invention is to provide a light transmission screen, which has been improved in contrast, color shift and color shading, expanded in horizontal view angles and also enhanced in picture resolution.

A light transmission screen according to the present invention comprises:
a transparent Fresnel lens sheet (1, 4);
a transparent lenticular lens sheet (2); and
a front diffusion panel (3),
said front diffusion panel (3) comprising a diffusion layer (9) and transparent layer (10),
the diffusion layer (9) comprising fine granular light diffusion material (8) and being arranged on the entrance side of the diffusion panel (3),
wherein the exit surface of the diffusion panel (3) is flat.

The diffusion layer can also be formed of, for example, light diffusing fine particles and a binding material. It is also possible that the diffusion layer is formed of a resin and light diffusing fine particles dispersed in the foregoing resin.

Each respective member of the foregoing two sheets and one panel is assigned with specific functions which are combined together to perform as one complete screen. More specifically, on account of the structures wherein a front diffusion panel formed of two layers, a diffusion layer containing a diffusion material and a transparent layer, is arranged on the radiant light side which is closest to a viewer, the lenticular lenses can be made transparent without needing any diffusion material to be contained in the lenticular lens sheet.

Accordingly, almost 100% of the light incident on the incident light side lenticular lens is focused at the vicinity of the radiant light side lenticular lens.

As a result, improvements are made in color shift, shading and directivity, and also the gain is enhanced due to reduced light dissipation.

Because of the existence of the diffusion layer, it is made possible to focus picture images free of the stray light caused by diffused reflection, resulting in enhancement of picture resolution.
In addition, since the diffusion layer can be made thin, it is possible to achieve a horizontal view angle of close to 180° expanding the horizontal view angle greatly.

Also, the use of a transparent layer contributes to improvement in clearness of picture images.

Furthermore, it is no longer needed to prepare a variety of lenticular lenses to meet the individual specifications for each respective projection television receiver, resulting in a reduction of investments in molding dies and an increase in productivity.
Consequently, an overall cost reduction has been made possible.
Of course, the performance specifications for screens can be readily modified to cope with changes in marketing requirements.

In addition, the transparent lenticular sheet does not require any exchanges of molding dies and mixtures adjustments for the diffusion material and light absorption material, thereby facilitating the production thereof and contributing to a cost reduction.

It is also possible to employ structures wherein either a black material presenting a nearly uniform light absorption spectrum in the visible light wavelength region or a visible light absorption material having selective wavelength characteristics is contained in at least one of the diffusion layer or transparent layer of the front diffusion panel.
According to the foregoing structures, light absorption in the visible light wavelength region can be enhanced, resulting in improvement of contrast against external light.
At this time, coloring matter, dye, pigment, carbon, metal salt or the like can be used as the material for absorbing visible light.
The contrast against external light can also be improved by dying the diffusion material to a specified color.

The absorption spectrum of the foregoing visible light absorption material can not necessarily be flat, and may be showing some wavelength curves or peaks depending on the purposes intended for improvements in the intensity ratio and color purity enhancement of the tri-color cathode-ray tube (CRT) used in projection television receivers.

It is also possible to employ structures wherein the surface of the Fresnel lens sheet or diffusion panel is disposed with an antistatic film or layer, or provided with such antistatic means utilizing an antistatic material, a plastic plate containing an antistatic agent or the like.
With the use of antistatic means as above, deposition of dust and fluff inside of the screen, where easy access for cleaning is not possible, is removed. As a result, blurring of pictures on the screen due to dust and fluff is eliminated, thereby gaining distinct pictures.

Further, it is possible to employ structures wherein the surface of the Fresnel lens sheet or front diffusion panel is disposed with an antireflection film or layer, or provided with such antireflection means as antireflection coating and the like.
With the use of antireflection means as above, the screen's transmittance is enhanced, resulting in an increase of brightness by about 10 %.
Besides, because of the reduced external light reflection, the contrast against external light is improved by 15 %, and pictures of pleasant watching with little reflection appearing on the screen surface are realized.

The foregoing front diffusion panel, antistatic means and antireflection means can be produced by the conventional production methods without requiring any special methods, and so these can be produced at a lower cost.

It is also possible to employ structures wherein an external light absorbing layer is disposed on a specified place of the surface of the lenticular lens sheet.
As a result, the vertical stripes formed on the lenticular lens sheet and external light absorbing layer do not get to the eyes of a viewer, thereby enhancing the clearness of the transparent layer and producing bright pictures of high resolution.
The external absorbing layer can be formed, for example, in a pattern where black stripes are arranged at equal distances from one another.

It is additionally made possible to increase the gain of the front diffusion panel and narrow the vertical view angle by just reducing the diffusion material content in the diffusion layer.
Conversely, if the diffusion material content in the diffusion layer is increased, the gain is reduced and the vertical view angle is expanded.

### BRIEF DESCRIPTION OF DRAWINGS

Fig. 1 is a perspective view to show structures of a light transmission screen as a first exemplary embodiment (Example 1) of the present invention.

Fig. 2 is a cross-sectional view of an important section of Fig. 1.

Fig. 3 is a light rays tracing diagram drawn with respect to a lenticular lens of Example 1.

Fig. 4 is a diagram to show brightness vs. view angle curves for red, green and blue, observed with the light transmission screen of Example 1.

Fig. 5 is a comparison data to show how the color shift is improved with the light transmission screen of Example 1.

Fig. 6 is a comparison date to show how the shading is improved with the light transmission screen of Example 1.

Fig. 7 is an illustration to show how the horizontal view angle is expanded with the light transmission screen of Example 1.

Fig. 8 is an illustration to explain theoretically how light rays pass from the diffusion surface to the flat surface with the transmission screen of Example 1.

Fig. 9 is an illustration to explain theoretically how light rays pass from the flat surface to the diffusion surface with the light transmission screen of Example 1.

Fig. 10 is an illustration to show how light rays pass through the front diffusion panel of the light transmission screen of Example 1.

Fig. 11 is a diagram to show the evaluation results of the front diffusion panel used with the light transmission screen of Example 1.

Fig. 12 is a cross-sectional view of an important section of a light transmission screen as a second exemplary embodiment (Example 2) of the present invention.

Fig. 13 is a cross-sectional view of an important section of a light transmission screen as a third exemplary embodiment (Example 3) of the present invention.

Fig. 14 is a block diagram to show a manufacturing method for a light transmission screen as an exemplary embodiment of the present invention.

Fig. 15 is a block diagram to show a manufacturing method for a light transmission screen as another exemplary embodiment of the present invention.

Fig. 16 is a diagram to show brightness vs. view angle curves for red, green and blue, observed with a prior art light transmission screen.

Fig. 17 is a perspective view to show structures of a prior art light transmission screen.

Fig. 18 is a cross-sectional view to show structures of an important section of a prior art light transmission screen and explain how light passes.

Fig. 19 is an illustration to explain the limitations involved with horizontal view angles of a prior art light transmission screen.

### DETAILED DESCRIPTION OF THE INVENTION

Details of the light transmission screen of the present invention are explained according to the following exemplary embodiments:

### Example 1

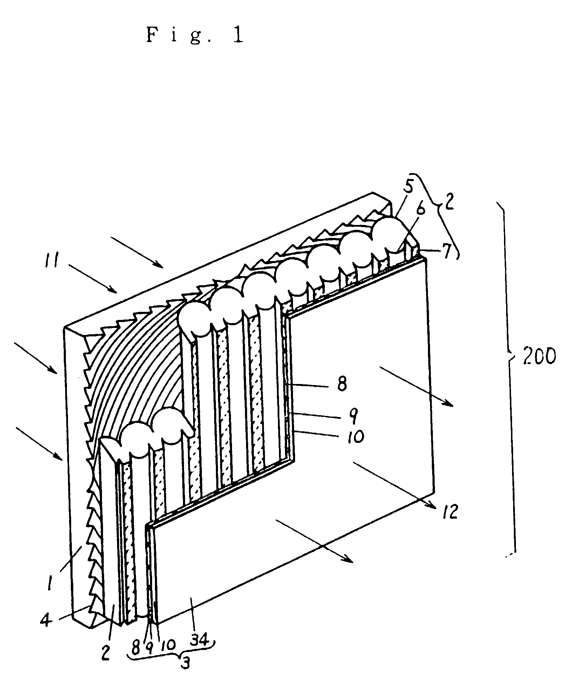

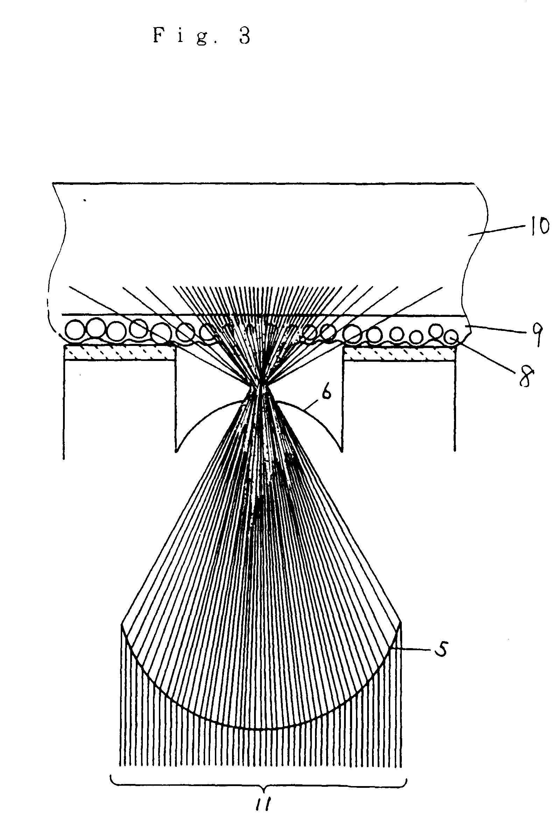

A first exemplary embodiment of the present invention of a light transmission screen is explained with the help of Fig. 1 to Fig. 11.

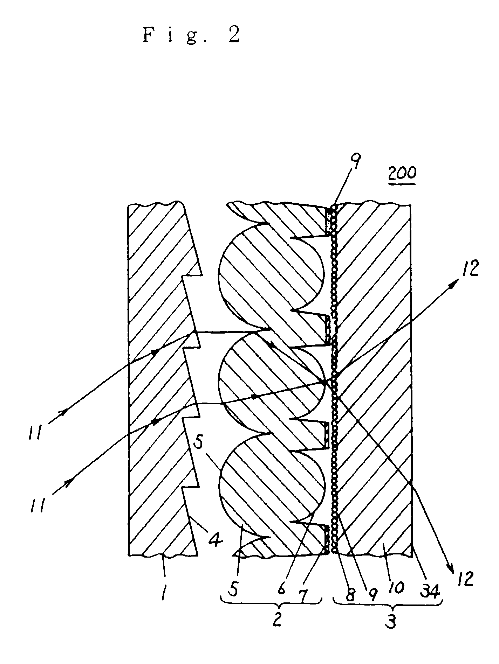

Fig. 1 is a perspective view to show structures of a light transmission screen as a first exemplary embodiment (Example 1) of the present invention, and Fig. 2 is a cross-sectional view of an important section of Fig. 1.

A light transmission screen 200 is formed of three elements comprising a Fresnel lens sheet 1 arranged on the incident light side thereof, a transparent lenticular lens sheet 2 arranged on the radiant light side of the foregoing Fresnel lens sheet 1 and a front diffusion panel 3, which is formed of two layers, a diffusion layer 9 containing a light diffusion material 8 and a transparent layer 10, and arranged on the radiant light side of the foregoing lenticular lens sheet 2.

The diffusion layer 9 is disposed on the radiant light side that is closest to a viewer.
Fresnel lenses 4 having a specified configuration are formed on the radiant light side of the Fresnel lens sheet 1.
Incident light side lenticular lenses 5 having a specified configuration are formed on the incident light side of the foregoing lenticular lens sheet 2 and radiant light side lenticular lenses 6 having a specified configuration are formed on the radiant light side thereof, and further an external light absorption layer 7 is formed on the surface of the radiant light side lenticular lenses 6 in a black stripe pattern.

Light rays first pass through the light transmission screen 200 as incident light 11 and then get to the eyes of a viewer as radiant light 12.

The Fresnel lens sheet 1 is formed of, for example, acrylic resin, polycarbonate or the like.
The lenticular lens sheet 2 is formed of a transparent resin material such as, for example, acrylic resin, polycarbonate or the like, containing no diffusion materials.
The foregoing front diffusion panel 3 has its principal surface 34, which is closest to a viewer watching the transparent layer 10, made glossy.

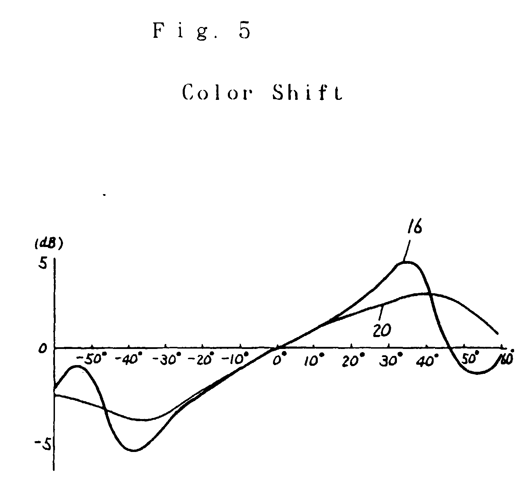

According to the prior art structures as shown in Fig. 17 to Fig. 19, a diffusion material 107 corresponding to the light diffusion material 8 of the present invention is contained in a lenticular sheet 102 by dispersion, and about 30 % of the incident light 109 is reflected diffusingly and turns into diffused reflection light (stray light) 111.

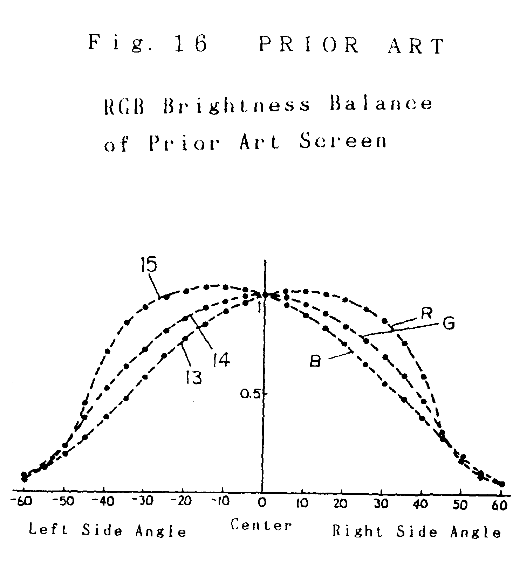

In Fig. 16, how the prior art lenticular lens performs is shown.
According to Fig. 16, when the respective brightness curves for red (R), green (G) and blue (B) (referred to as R curve, G curve and B curve hereafter) are compared with one another, the red curve 13 as well as the blue curve 15 show large changes when compared with the green curve 14. In other words, the color shift (R/B ratio) of the both above is large as assimilated with the curve 16 of Fig. 5.

However, according to the structures of the present example, the almost entire incident light 11 passes through the incident light side lenticular lenses 5, turns into radiant light and focuses on the surface of the radiant light side lenticular lenses 6.
As a result, the lens performance is exhibited to the fullest extent, thereby enabling the color shift adjustment to be made to the extent closest to the designed value.

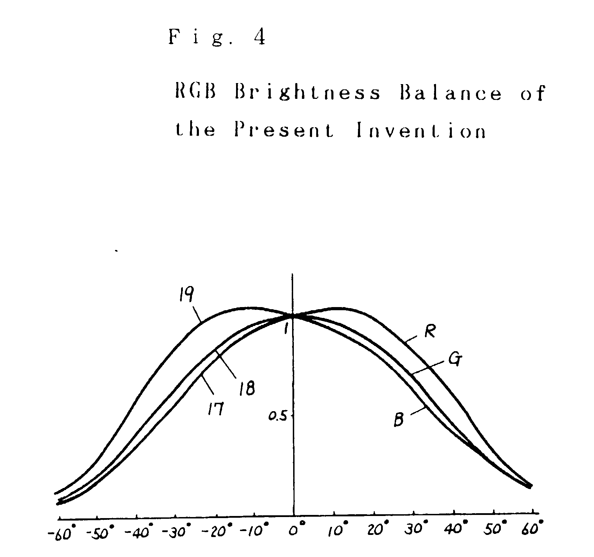

With the present example's structures, the respective brightness curves of R, G and B show that the changes in the red curve 17 and blue curve 19 are small in comparison with the changes in the green curve 18, as observed in Fig. 4.

The color shift is as indicated by the color shift curve 20 of Fig. 5 and reduced almost to one half when compared with the prior art color shift curve 16, thereby exhibiting a remarkable effect.
Particularly, although steep changes are observed at 15° and more in left and right directions with the prior art screen structures, the present example's structures show gradual changes at any angles, and any color shift is hardly recognizable by human eyes.

The designing of radiant light side lenticular lenses for achieving a successful color shift adjustment has been so far made through trial and error due to the existence of stray light caused by a diffusion material.
However, in the case of the present example's transparent lenticular lenses, the color shift very close to the desired design value can be readily realized, resulting in bringing about various advantages such as expanded freedom in designing, a shortened period of development, a reduction in prototype production cost, and the like.

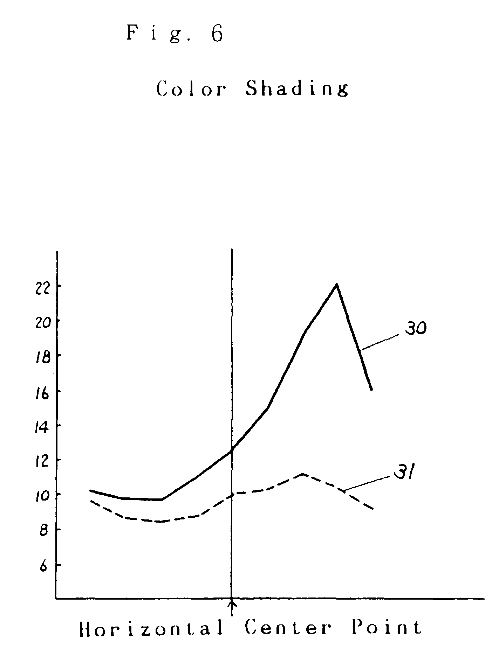

As a matter of course, a reduction in color shift leads to a decrease in color shading which takes place when viewed from the front of the screen.
Measurement results of color shading are shown in Fig. 6. The Prior art color shading curve 30 shows a color temperature differential of as large as 12000 °K between the extremes of right and left.
Contrastingly, the color shading curve 31 of the present example shows a color temperature differential of only 3000 °K, which is much smaller than that of the prior art. As a result, a compensation through an electrical circuit can be achieved very easily.

A diffusion layer 9 is formed of a diffusion material 8, effects of which enable light to focus or diffuse.
A thinner diffusion layer is better for the diffusion layer 9.
As the thickness of the diffusion layer 9 decreases, so is the image resolution enhanced.
For example, the thickness of the diffusion layer 9 is reduced below around 400 µm, and then the image resolution starts to improve.
The effect of the thinner diffusion layer is multiplied as the thickness thereof decreases.
A more desirable effect is expected over the ranges of about 0.1 µm to 200 µm.
The effect contributing to the enhancement of image resolution becomes minimal with the thickness of about 400 µm and more.

The diffusion layer 9 is more desirably formed of a diffusion material 8 and a binding material.
As the diffusion material 8 is used spherical light diffusing fine particles of about 0.1 µm to 50 µm in diameter, formed of a transparent resin material or transparent inorganic material, and transparent materials are particularly preferred.
Although there are no particular restrictions imposed on the binding materials, such materials as contributing to attachment of the diffusion material 8 to the transparent layer 10 are usually used.
Such materials include, for example, acrylic resin, polycarbonate, polyester and the like.

In the example as illustrated in Fig. 2, the diffusion layer 9 is formed on the principal surface of the front diffusion panel 3 at the incident light side thereof by disposing the diffusion material 8 uniformly to the thickness equal to one particle's diameter of the diffusion material 8 formed in fine particles, each of which does not exceed about 30 µm in diameter.
More specifically, when the particle diameter of the diffusion material 8 ranges from about 1 to 10 µm, the picture brightness and resolution are improved remarkably.
Naturally, the picture brightness and resolution are greatly improved with the diffusion material 8 of particle diameters ranging from about 1 to 20 µm, or from about 10 to 30 µm.

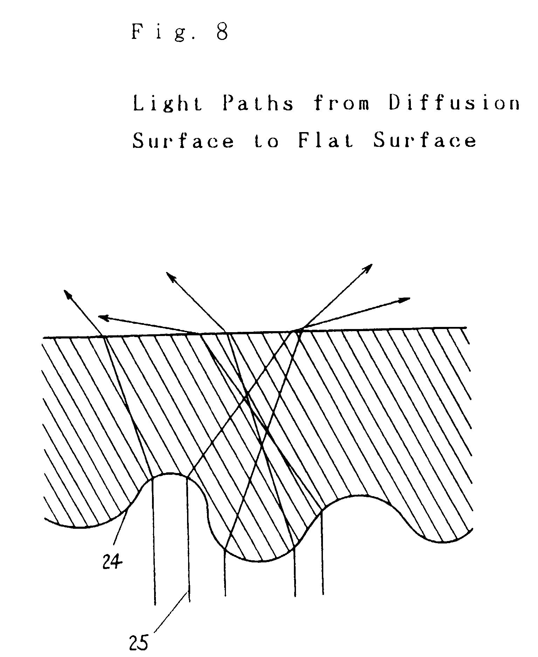

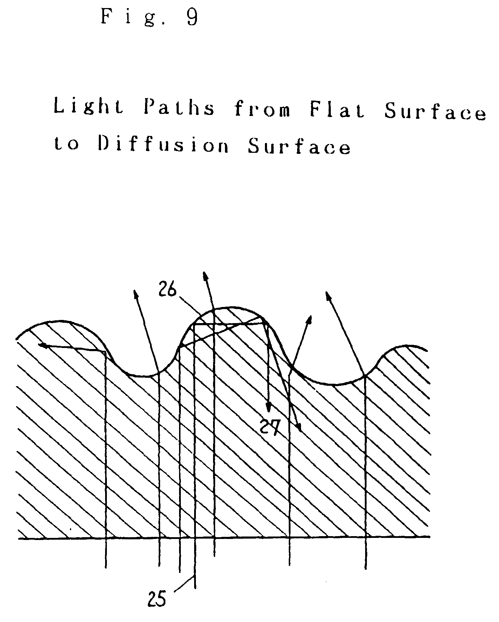

According to the foregoing structures, the light transmission is enhanced and the vertical directivity as well as the horizontal directivity is improved without lowering the screen gain.
The reasons for above are as follows:
When light proceeds into the air through a transparent substance and the incidence angle is large, total reflection takes place and the light is not transmitted.
There is a theory that the direction of the maximum diffusion of transmitted light is in the direction of a tangent to the interface.
According to this theory, when incident light 25 proceeds through a diffusion surface 24, total reflection of the incident light 25 hardly takes place and the radiance angle of the diffusion light tends to become large as illustrated in Fig. 8, resulting in increased transmittance and haze.
Conversely, when a diffusion surface 26 is formed on the radiant light side, the total reflection light 27 out of the incident light 25 is abundant and the diffusion angle tends to become small as illustrated in Fig. 9, resulting in reduced transmittance and haze.

A survey conducted by means of a haze-meter on the front diffusion panel 3 which is structured according to the present example has revealed that an irregularly configured surface wherein the theory as illustrated by Fig. 8 and Fig. 9 holds when the front diffusion panel 3 is provided with a diffusion layer 9 disposed with a diffusion material 8 uniformly to the thickness equal to one particle's diameter of the diffusion material 8 formed in fine particles, each of which is kept at about 5 µm in diameter (the variation in the normal distribution thereof ranges from about 1 µm to 10 µm.)

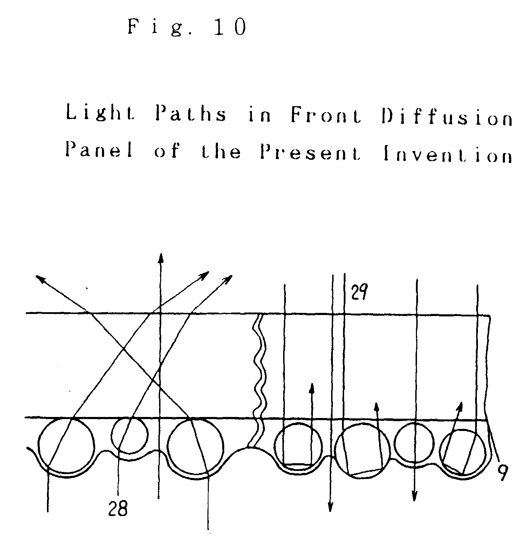

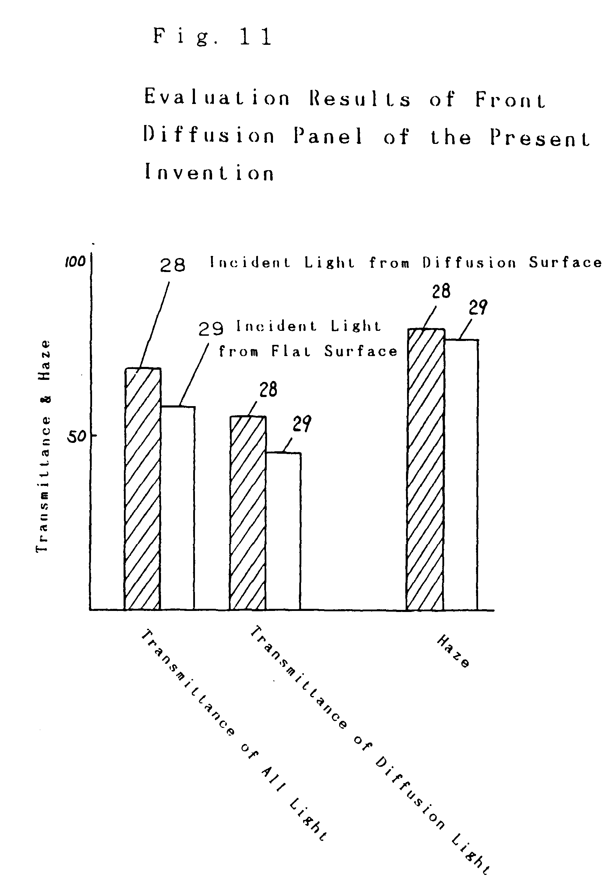

Fig. 10 and Fig. 11 show the results of transmittance and haze value measured on the incident light 28 after the diffusion layer 9 and the incident light 29 after the flat surface.
As indicated in Fig. 11, the incident light 28 after the diffusion surface shows higher values in any characteristics of the light transmittance, diffusion light transmittance and haze than the values of the incident light 29 after the flat surface.
This is the same result as indicated theoretically in Fig. 8 and Fig. 9.
In other words, by employing the structures wherein the diffusion layer 9 is disposed on the incident light side, better utilization of light by the front diffusion panel 3 is achieved.

The diffusion layer 9 is not necessarily to be disposed uniformly, as illustrated in Fig. 2, to the thickness equal to the diameter of one fine particle of the diffusion material 8 used.
More specifically, a structure wherein the diffusion material 8 is disposed by distribution in a multi-layer configuration is also possible.
Also possible is a structure for the diffusion layer 9, wherein the diffusion material 8 is contained by dispersion in such transparent resins as acrylic resin, polycarbonate resin, polyester resin, acryl-styrene copolymer, polysulfone or the like, thereby achieving the same effect.

Thus, with the lenticular lens sheet which is formed of a transparent material having no diffusion material content, improvements have been so far made in color shift, color shading, picture resolution, light utilization and the like.

With the prior art structures as illustrated in Fig. 19, the position where the focused image 115 is situated in the vicinity of the surface of the radiant light side lenticular lens 105 is lower than the supface of the external light absorption layer 106 by about 70 to 100 µm, thereby imposing a limitation to the extent of the horizontal view angle 117, which is set by the two light rays of the radiant light 112 situated at the both extreme ends.
As a result, all the external light rays outside of the two radiant light rays 112 are blocked by the external light absorption layer 106, and the picture images from both the right and left edges do not reach the eyes of a viewer (imposing a limitation to the view angle).

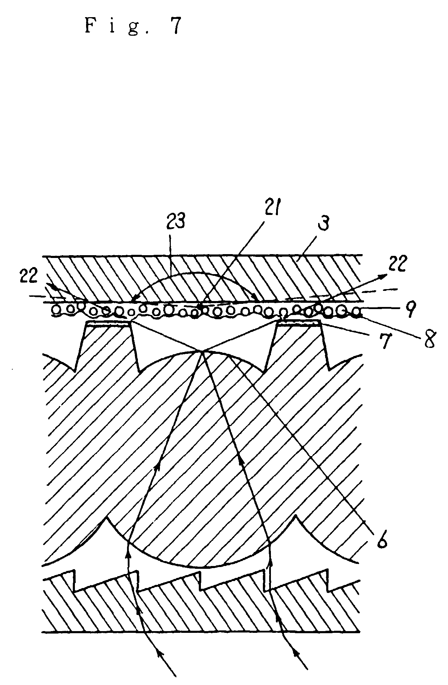

In contrast, with the front diffusion panel 3 of the present example, picture images are focused on the diffusion layer 9 as illustrated in Fig. 7, and no picture images are focused in the vicinity of the surface of the radiant light side lenticular lens 6.
A focused picture image 21 is formed on the diffusion layer 9, and the radiant light 22 is blocked by the external light absorption layer 7. However, since the focused picture image 21 is situated on the back side of the front diffusion panel, the horizontal view angle 23 extends as much as close to 180° in the same manner as with a direct-vision Braun tube.

Furthermore, by having a black material, which shows a uniform light absorption spectrum over the visible wavelength region, contained in at least one of the thin diffusion layer 9, transparent layer 10 and diffusion material 8, the external light reflection on account of the diffusion material 8 is eliminated, resulting in enhancement of the contrast against external light.
For example, when a black color element, die or pigment is contained by 30 %, an improvement in the external light contrast by 32 % is observed on the screen where external light of 360 Lux is irradiated.
Also, with the structures wherein a material showing selective wavelength characteristics in the visible wavelength region is contained, the external light contrast is improved.
In addition, with the structures wherein a diffusion material 8 died by a color pigment is used, the contrast against external light is improved.

With the front diffusion panel 3 as used in the present example, the vertical stripes formed on the lenticular lenses 5 and 6 and the external light absorption layer 7 do not get to the eyes of a viewer because of the existence of the diffusion layer 9.

Besides, the other principal surface of the transparent layer 10, which supports the diffusion layer 9, is situated at the position closest to a viewer, thereby constituting a flat mirror surface (a glossy surface) and enabling to realize clearness in picture.
Also, the external light from the ceiling illumination or the like is reflected obliquely downwards without getting to the eyes of a viewer, thereby contributing to improvement of the contrast against external light.
It is, of course, possible to make the foregoing principal surface not glaring by having the surface roughened instead of mirror finished.

Further, it is preferred that the aforementioned transparent layer 10 is about 1 to 5 mm thick.
If the thickness is less than about 1 mm, the transparent layer 10 becomes not strong enough, and liable to suffer from warpage and also breakage.
In case where the thickness exceeds about 5 mm, the transparent layer 10 becomes heavier in weight and higher in cost.

The thickness of the Fresnel lens sheet 1 is about 1 to 3 mm, for example.
The lenticular lens sheet 2 is about 0.5 to 2 mm thick, for example.
With the present example, it is also possible to have the diffusion layer 9 disposed on the surface at the viewer's side (i.e., the radiant light side surface of the transparent layer 10).

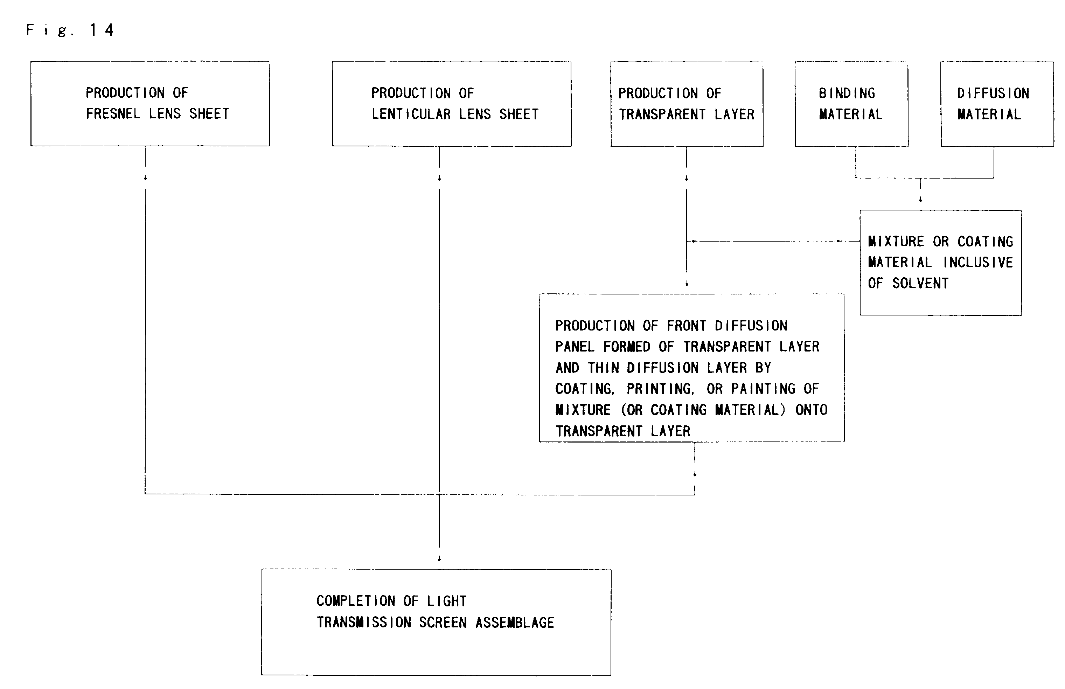

Next, an exemplary embodiment of the manufacturing method for a light transmission screen of the present invention will be explained with the help of Fig. 14.
A Fresnel lens sheet 1 is produced by a press molding successively performed by means of a flat type press machine or the like.
A lenticular lens sheet 2 is produced by a continuous extrusion molding using a lens shape roll type or T-die type extrusion molding machine, or by a press molding successively performed by means of a flat type press machine.
These Fresnel lens sheet 1 and lenticular lens sheet 2 are made of transparent resin materials such as acrylic resin, polycarbonate resin or the like, but no diffusion materials 8 are mixed with the transparent resin materials.

A manufacturing method for a front diffusion panel 3 will be described in the next.
A diffusion layer 9 disposed on the light incident side surface of a transparent layer 10 is produced by such processing steps as printing, coating, transferring, painting and the like.

First, an explanation is made on screen printing as follows:
The transparent layer 10 is prepared by a transparent plate formed of acrylic resin or the like.
Separately from above, a mixture of a binder made mainly from a transparent material such as acrylic resin or the like and about 15 % wt of a diffusion material 8 is prepared.
Paints or inks prepared by having solvent contained in the foregoing mixture can also be used.
Then, the above mixture is screen printed on the surface of the transparent plate by use of a screen printing plate of about 350 meshes.
The diffusion layer 9 is thus formed by printing to the maximum thickness of around 12 µm.
More specifically, the diffusion layer 9 is disposed to the thickness equivalent to one particle's diameter of the diffusion material 8 which is, in turn, prepared so that each individual particle is uniformly dispersed throughout.
The surface of each respective particle of above is coated with a transparent binder to the thickness of about 1 to 2 µm.

Then, the foregoing Fresnel lens sheet 1, lenticular lens sheet 2 and front diffusion panel 3 are piled up successively in this order for assemblage.
Thus, the light transmission screen is completed.

Fig. 7 and Fig. 10 show respectively an enlarged cross-sectional view of important portions of the finished light transmission screen.
As the diffusion material 8 is used, for example, a beads material made of a transparent resin material or the like having an average particle size of about 5 um in diameter (with a distribution in the particle diameter ranging from 1 to 10 µm.)
Besides above, beads made of such resins as polystyrene, polycarbonate, acryl-styrene copolymer and the like, or glass can be used as the diffusion material 8.

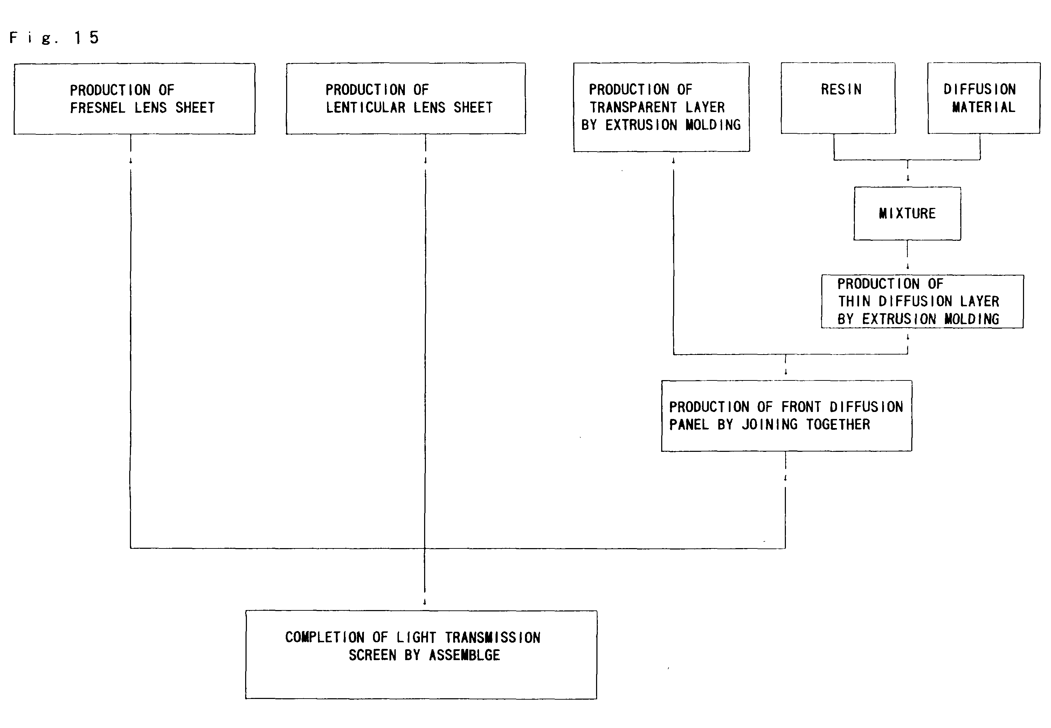

The performance of the foregoing three-element light transmission screen comprising a front diffusion panel 3, Fresnel lens sheet 1 and lenticular lens sheet 2 show 5 as the gain, 50° as the horizontal view angle at the 1/3 brightness from the maximum brightness (referred to as Bll hereafter) and 12° (11° in Fig. 15) as the vertical view angle T at the 1/3 brightness from the maximum brightness (referred to as β V hereafter).
In contrast, the performance of the prior art screen as illustrated in Fig. 17 shows 4.7 as the gain, 45° as the horizontal view angle and 11° as the vertical view angle.

The diffusion layer 9 is made so as to have the thickness of about 0.1 to 200 µm.
Accordingly, a diffusion material with the particle size of as large as 200 µm in diameter can be used, but when the printing plate, printing process, efficiency thereof and the like are taken into consideration, the particle size of about 50 µm and less in diameter is preferred and the average particle diameter of about 5 µm is most desirable.

The printing method employed is not limited to screen printing alone, and other printing methods such as gravure printing, offset printing, roll coat printing or the like can also be used.
According to the printing method employed, the particle size and mixture ratio of the diffusion material are selected in the most appropriate manner, and the printing is to be performed under the optimum printing conditions.

It is also possible to manufacture the front diffusion panel by other appropriate processing methods than the above.
For example, a diffusion material 8 is applied in advance to the surface of a polyethyleneterephuthalate (PET) film by coating or painting, and the attached diffusion material 8 can be transfer printed on one of the principal surfaces of the transparent layer 10 by hot stamping or pressing.

### Example 2

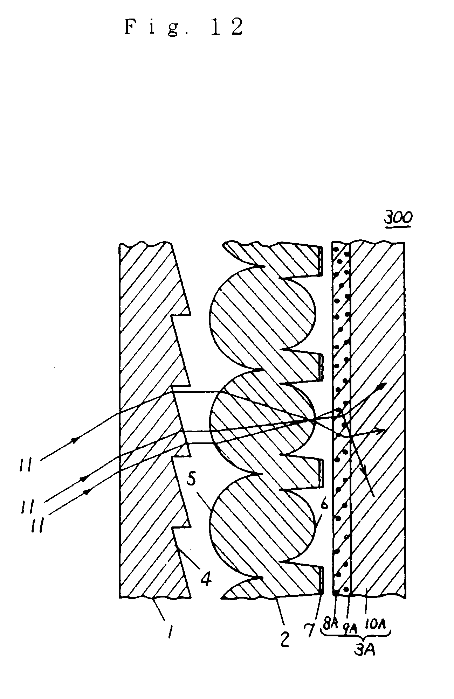

A second exemplary embodiment of a light transmission screen of the present invention will be explained with the help of Fig. 12.
Fig. 12 is a cross-sectional view to show an important portion of the light transmission screen of the second exemplary embodiment.
The light transmission screen 300 differs greatly in structures from the light transmission screen 200 as described in Example 1 in having a diffusion material 8A, which is contained in a diffusion layer 9A, mixed by dispersion in multiple layers.
The composing elements other than above are the same as used in the light transmission screen of Example 1 as illustrated in Fig. 1.

The optimum average particle size of a diffusion material 8A is about 15 µm in diameter (with the normal distribution of particle size ranging from about 5 to 25 µm).
The thickness of a diffusion layer 9A ranges from about 5 to 200 µm.
The light transmission screen 300 thus structured performs almost the same as described in Example 1.

With the present example, an extrusion molding process is used as the manufacturing method for the front diffusion panel 3A.
The foregoing process will be explained with the help of Fig. 15.

First, a mixture of a diffusion material and a transparent resin like acrylic resin is extrusion molded to produce the diffusion layer 9A.
Separately from above, a transparent resin like acrylic resin is extrusion molded to produce a transparent layer 10A.
Then, both of these are put together by piling up during the extrusion molding process or through a separate process.

As another manufacturing method for the front diffusion panel 3A is employed a method comprising the steps of first producing a diffusion layer 9A made of a film sheet of about 0.1 to 0.2 mm thick dispersed uniformly with a diffusion material in multiple layers, extrusion molding a transparent layer 10A on the foregoing film sheet, and at the same time putting together using an adhesive by piling up the diffusion layer 9A and transparent layer 10A.

The methods for producing the Fresnel lens sheet 1 and lenticular lens sheet 2 are the same as employed in Example 1.
These Fresnel lens sheet 1, lenticular lens sheet 2 and front diffusion panel 3A are piled up successively in this order for assemblage to complete the light transmission screen 300.
Thus, the diffusion panel to constitute the light transmission screen 300 can be produced readily and inexpensively using the conventional manufacturing method and equipment.

Besides, with Example 2, the particle size of the diffusion material ranges from about 5 to 25 µm in diameter and it is desirable to use a diffusion material of uniform size particles.
The position where the diffusion layer 9A is disposed can be any place, and is not necessarily limited to the side of the lenticular lens sheet 2.
For example, the diffusion layer 9A can also be disposed on the surface at a viewer's side (i.e., the light radiant side surface of the transparent layer 10A).

### Example 3

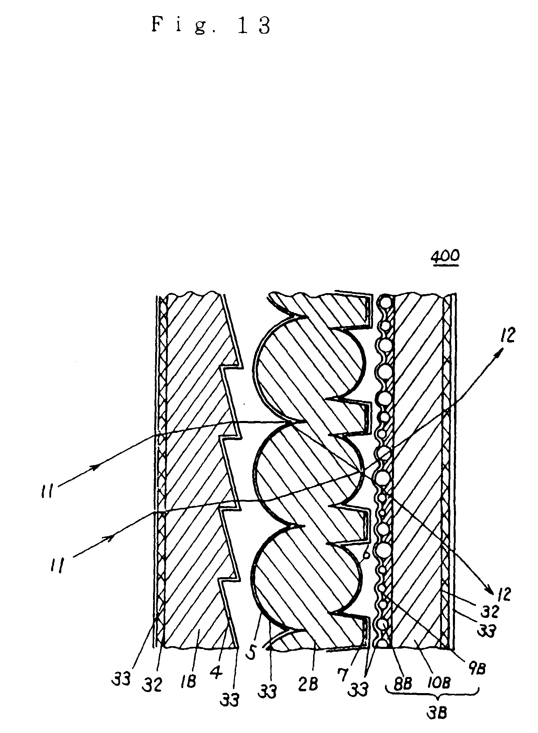

A third exemplary embodiment of a light transmission screen of the present invention will be explained with the help of Fig. 13.
Fig. 13 is a cross-sectional view to show an important portion of the light transmission screen of the third exemplary embodiment.
The third exemplary embodiment is characterized by having an antistatic means and antireflection means incorporated for the purposes of improving external light contrast, eliminating the reflection shown at the screen's face plate, gaining clear pictures on the screen free of dust and fluff, and the like.

As the antistatic means are used an antistatic film or layer, an antistatic agent, an antistatic plate containing an antistatic agent, and the like.
As the antireflection means are used an organic plastic material, an inorganic material or the like. A film or layer made of a material with a low refractive index is in particular preferred.

As shown in Fig. 13, an antistatic film 32 disposed on the incident light side surface of the Fresnel lens sheet 1B and also on the principal surface of the diffusion panel 3 located closest to a viewer contributes to elimination of dust and fluff attached to the foregoing surfaces due to static electricity.

Further, an antireflection film 33 disposed on at least one of the surfaces of the Fresnel lens sheet 1B, lenticular lens sheet 2B and diffusion panel 3B contributes to improvement in external light contrast and display of pictures having no reflection on the screen's face plate.

By having an antireflection film formed on all the surfaces of the Fresnel lens sheet 1B, lenticular lens sheet 2B and diffusion panel 3B, particularly excellent antireflection effects are gained.

First, an antistatic layer 32 is disposed on the specified surfaces of the Fresnel lens sheet 1B and diffusion panel 3B, respectively.
Then, an antireflection film 33 is disposed on at least one of the foregoing surfaces where the antistatic film 32 has been formed.
With the above structures, the static electricity charges produced on the surface of the antireflection film 33 due to friction or electric field are eliminated.

The use of the antireflection film is based on the theory of interference effect of light, and by having the film thickness made equal to λ /(4n) [where λ : wavelength of light, n : refractory index of material for film], the reflection of the light having wavelength of λ is reduced and the transmittance thereof is increased.

As the antireflection film employed with the present example is used a transparent resin composite of fluorine family (Asahi Glass Co.'s CYTOP, n = 1.34) having a refractory index which is lower than that of the transparent resin materials used as the base material for the screen [for example, acrylic resin (n = 1.49), polycarbonate (n = 1.57), polystylene (n = 1.59), acryl-stylene copolymer (n =1.51 to 1.57) and the like].

The surface resistance of aforementioned CYTOP is as extremely large as 10¹⁶ ohms, and the same as that of the base material for the screen.
Therefore, when air is dry and friction with other materials takes place, static electricity is readily generated, and once electrostatic charges are produced the charges do not decay for a long period of time.
Normally, when an antistatic film of surface resistance ranging from 10¹¹ to 10¹² ohms disposed on the foregoing screen base material, the electrostatic charges produced thereon used to decay in a short period of 1 to 2 seconds.
However, in the case of the present example where an antireflection film of high surface resistance is formed on the surface of an antistatic film, it is known that the static electricity charges can not be removed in a short period by means of a conventional antistatic treatment.
Various experiments have so far been attempted to solve the foregoing problem.
As a result, it is found out that no static electricity charges are produced or even if produced the charges decay by half or totally in 1 to 2 seconds by making the thickness of the antireflection film less than λ /(4n) and the surface resistance less than 10¹⁰ ohms.

Various resin materials already incorporated with an antistatic provision are available in the market.
So, it is possible to constitute structures wherein a resin plate or resin material having surface resistance of 10¹⁰ ohms or less is used and the surface of the antistatic film thereof has a coating of an antireflection film made of a metal oxide of low refractory index, an inorganic material, a surfactant or the like.

When a coating of the CYTOP thin film is applied to a resin plate having an antistatic provision, adhesion of the coating is not strong enough and even wiping the surface softly using a cloth of the like causes the CYTOP thin film to peel off easily, thereby creating a problem.
For example, a rubbing test of 2 to 3 times wiping with a 500 g force causes the CYTOP thin film to peel off.
For the purpose of preventing this by strengthening the adhesion of the CYTOP thin film, it is possible to use one of such treatments as a silane coupling treatment, an activated energy treatment, a primer treatment or the like.
According to the foregoing treatments, the adhesion strength is increased by as much as 10 times.

Further, as the antistatic agent is used ELCOM [Shokubai-Kasei Co.'s brand name, surface resistance: 10⁷ to 10⁸ ohms. a specific purpose printing ink comprising SnO₂, vinyl acetate chlorinated resin and cyclohexane-ethyl acetate cellulose solvent], thereby increasing the adhesion strength of the CYTOP thin film by 100 times (peeled off after 250 to 300 times of a rubbing test) without any generation of static electricity.

The foregoing antistatic material can be applied by means of a screen printing method, for example.
The coating film thickness is about 0.1 to 3 µm.

In the production of the diffusion panel 3B, a transparent layer 10B is first applied by printing to the light incident side surface of the diffusion layer 9B, and then ELCOM as an antistatic material is applied by printing to the radiant light side surface of the transparent layer 10B.
Thus, an antistatic film 32 is formed.
At this time, it is also possible to apply the antistatic film 32 first by printing, and then the diffusion layer 9B afterwards.

After the foregoing antistatic material treatment,
the antireflection film 33 is disposed on a specified surface to the thickness of λ /(4n) by means of a dip coating method, for example.
All the three basic materials to constitute the light transmission screen are applied with the antireflection layer 33 on the respective surfaces thereof.
However, it is also possible to employ structures wherein at least one of the screen's basic materials is applied with the antireflection film 33 with the same resultant effect as above.

Table 1 shows a comparison of performance between the light transmission screen of the present invention and that of the prior art.
In Table 1, α is the view angle at 1/2 of the center brightness, β is the view angle at 1/3, γ is the view angle at 1/5 and δ is the view angle at 1/10.

Table 1 tells that the light transmission screen of the present invention has the following features in comparison with that of the prior art:

The gain and external light contrast are high.

The vertical view angle and horizontal view angle are expanded.

The color shift is reduced to about one half.

The shading is reduced to about one fourth.

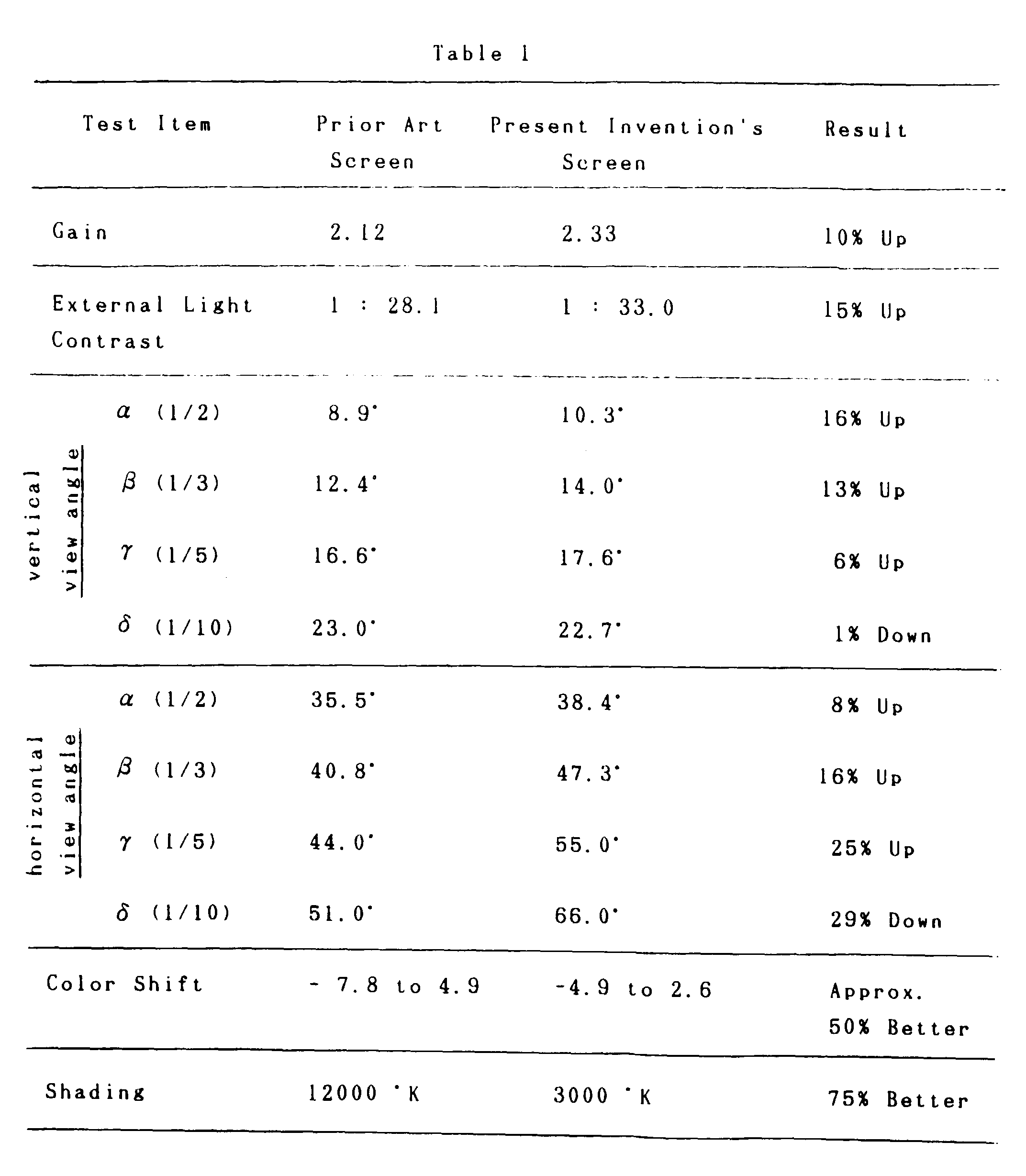

## Claims

1. A light transmission screen comprising in order along the ray path:
a transparent Fresnel lens sheet (1, 4);
a transparent lenticular lens sheet (2); and
a front diffusion panel (3),
said front diffusion panel (3) comprising a diffusion layer (9) and transparent layer (10),
the diffusion layer (9) comprising fine granular light diffusion material (8) and being arranged on the entrance side of the diffusion panel (3),
wherein the exit surface of the diffusion panel (3) is flat.

2. A light transmission screen according to claim 1, wherein said diffusion layer is formed by disposing uniformly said diffusion material to the thickness equal to about the diameter of one particle contained in said diffusion material.

3. A light transmission screen according to claim 1, wherein said diffusion material is characterized by having an average particle size of about 5 µm in diameter with the particle size distribution ranging from about 1 to 10 µm.

4. A light transmission screen according to claim 1, wherein said diffusion material is formed of a binder and a fine granular diffusion material of light diffusing properties.

5. A light transmission screen according to claim 1, wherein aid diffusion material is formed of a transparent resin material and a fine granular diffusion material of light diffusing properties.

6. A light transmission screen according to claim 1, wherein said diffusion layer contains a fine granular diffusion material of light diffusing with each respective particle thereof being transparent and measuring about 0.1 to 50 µm in diameter, and has the thickness of about 0.1 to 200 µm.

7. A light transmission screen according to claim 1, wherein the principal surface at the radiant light side of said transparent layer is one selected from a surface of mirror flatness and a surface of unevenness.

8. A light transmission screen according to claim 1, wherein said diffusion layer contains a diffusion material, the surface of which is dyed by color pigment.

9. A light transmission screen according to claim 1, wherein at least one selected from said diffusion layer and transparent layer further contains one material selected from a black material, which has a nearly uniform light absorption spectrum in the visible wavelength range and a visible light absorption material having selective characteristics.

10. A light transmission screen according to claim 1, further comprising an antistatic means (32) disposed on the incident light side surface of said Fresnel lens sheet (1, 4) and the radiant light side surface of said diffusion panel (3).

11. A light transmission screen according to claim 10, wherein said antistatic means is a thin film containing fine particles of tin oxide with a particle size of about 0.05 to 0.5 µm in diameter, and having surface resistance of about 10¹⁰ ohms and less.

12. A light transmission screen according to claim 1, further comprising an antireflecting means (33) disposed on the surface of at least one selected from the group of said Fresnel lens sheet (1, 4) lenticular lens sheet (2) and diffusion panel (3).

13. A light transmission screen according to claim 12, wherein said antireflecting means has a refractory index which is lower than that of any of said Fresnel lens sheet, lenticular lens sheet and front diffusion panel.

14. A light transmission screen according to claim 1, further comprising
an antistatic film (32) disposed on the incident light side of said Fresnel lens sheet (1, 4) and the radiant light side of said diffusion panel (3); and
an antireflecting film (33) disposed on all the surfaces of said antistatic film (32), the radiant light side of said Fresnel lens sheet (1, 4), the incident light side of said diffusion panel (3) and both the incident light side and radiant light side of said lenticular lens sheet (2).

15. A light transmission screen according to claim 14, wherein said antireflection film (33) has a refractory index which is lower than that of any of said Fresnel lens sheet, lenticular lens sheet and front diffusion panel, and satisfies the relation expressed by d (λ/(4n) (where d: thickness of said antireflection film, λ: light wavelength, n: refractory indexes of said Fresnel lens sheet, lenticular lens sheet and diffusion panel).

16. A manufacturing method for a light transmission screen comprising the steps of:
(a) producing a transparent Fresnel lens sheet (1, 4);
(b) producing a transparent lenticular lens sheet (2);
(c) producing a front diffusion panel (3) comprising the steps of:
(1) producing a transparent plate (10);
(2) disposing a diffusion layer (9) on the surface of the entrance side of said transparent plate (10) by applying thereto a mixture of a binder and a fine granular light diffusion material (8) by means of one method selected from printing, transferring, coating and painting; and
(d) piling up for assemblage said Fresnel lens sheet (1. 4), said transparent lenticular lens sheet (2) and said diffusion panel (3), wherein the exit surface of the diffusion panel (3) is flat.

17. The manufacturing method for a light transmission screen according to claim 16, wherein said step of producing a front diffusion panel (3) comprising the steps of
putting together for integration the diffusion layer (9) which has been produced by extrusion molding a mixture of the diffusion material (8) and a first transparent resin, and a transparent resin sheet, which has been produced by extrusion molding of a second transparent resin.

18. A manufacturing method for a light transmission screen according to claim 17, wherein said step (c) further comprises the steps of:
(1) producing said diffusion layer by extrusion molding of a mixture of said diffusion material and first transparent resin;
(2) producing said transparent layer by extrusion molding of said second transparent resin; and
(3) producing said front diffusion panel putting together for integration said diffusion layer and transparent layer.

19. The manufacturing method for a light transmission screen according to claim 17, wherein said step (c) further comprises the steps of:
(1) producing a diffusion layer in a film sheet form by extrusion molding of a mixture of said diffusion material and first transparent resin; and
(2) producing said front diffusion panel first by disposing said second transparent resin after extrusion molding on the surface of said diffusion layer in a film sheet form, and then by putting together for integration said diffusion layer and transparent layer.

## Patentansprüche

1. Durchlichtschirm, der in der Reihenfolge des Strahlengangs umfasst:
ein transparentes Fresnel-Linsenflächenelement (1, 4);
ein transparentes, linsenförmiges Linsenflächenelement (2); und eine vorderen Streuplatte (3),
wobei die vordere Streuplatte (3) eine Streuschicht (9) und eine transparente Schicht (10) umfasst,
die Streuschicht (9) feines, körniges Lichtstreumaterial (8) umfasst und auf der Eintrittsseite der Streuplatte (3) angeordnet ist, wobei die Austrittsfläche der Streuplatte (3) eben ist.

2. Durchlichtschirm, gemäß Anspruch 1, bei dem die Streuschicht gebildet ist, indem das Streumaterial gleichförmig mit einer Dicke von ungefähr gleich dem Durchmesser eines Teilchens gebildet ist, das in dem Streumaterial enthalten ist.

3. Durchlichtschirm, gemäß Anspruch 1, bei dem das Streumaterial **dadurch gekennzeichnet** ist, dass es eine durchschnittliche Teilchengröße mit einem Durchmesser von ungefähr 5 µm aufweist, wobei die Teilchengrößenverteilung im Bereich von ungefähr 1 bis 10 µm ist.

4. Durchlichtschirm, gemäß Anspruch 1, wobei das Streumaterial aus einem Bindemittel und einem feinen, körnigen Streumaterial mit Lichtstreueigenschaften gebildet ist.

5. Durchlichtschirm, gemäß Anspruch 1, bei dem das Streumaterial aus einem transparenten Kunstharzmaterial und einem feinen, körnigen Streumaterial mit Lichtstreueigenschaften gebildet ist.

6. Durchlichtschirm, gemäß Anspruch 1, bei dem die Streuschicht ein feines, körniges Streumaterial mit Lichtstreueigenschaften enthält, wobei jedes entsprechende Teilchen von ihm transparent ist und im Durchmesser ungefähr 0,1 bis 50 µm misst und eine Dicke von ungefähr 0,1 bis 200 µm aufweist.

7. Durchlichtschirm, gemäß Anspruch 1, bei dem die Hauptfläche auf der Lichtabstrahlseite der transparenten Schicht aus einer Fläche mit Spiegelebenheit und einer Fläche mit Ungleichförmigkeit ausgewählt ist.

8. Durchlichtschirm, gemäß Anspruch 1, bei dem die Streuschicht Streumaterial enthält, dessen Oberfläche durch ein Farbpigment gefärbt ist.

9. Durchlichtschirm, gemäß Anspruch 1, bei dem zumindest eine aus der Streuschicht und der transparenten Schicht ausgewählte des Weiteren ein Material enthält, das aus einem schwarzen Material, das ein nahezu gleichförmiges Lichtabsorptionsspektrum im sichtbaren Wellenlängenbereich aufweist, und einem Absorptionsmaterial für sichtbares Licht ausgewählt ist, das selektive Eigenschaften aufweist.

10. Durchlichtschirm, gemäß Anspruch 1, der des Weiteren ein antistatisches Mittel (32) umfasst, das auf der Oberfläche der Fresnel-Linsenflächenelement (1, 4) auf der Lichteinfallsseite und der Oberfläche der Streuplatte (3) auf der Lichtabstrahlseite angeordnet ist.

11. Durchlichtschirm, gemäß Anspruch 10, bei dem das antistatische Mittel eine dünne Schicht ist, die kleine Teilchen aus Zinkoxid in einer Teilchengröße mit einem Durchmesser von ungefähr 0,05 bis 0,5 µm aufweist und einem Oberflächenwiderstand von ungefähr 10¹⁰ Ohm und weniger hat.

12. Durchlichtschirm, gemäß Anspruch 1, der des Weiteren ein Vergütungsmittel (33) aufweist, das auf der Oberfläche von zumindest einem Element angeordnet ist, das aus der Gruppe des Fresnel-Linsenflächenelements (1, 4), des linsenförmigen Linsenflächenelements (2) und der Streuplatte (3) ausgewählt ist.

13. Durchlichtschirm, gemäß Anspruch 12, bei dem das Vergütungsmittel einen Brechungsindex hat, der kleiner als derjenige jeweils des Fresnel-Linsenflächenelements, des linsenförmigen Linsenflächenelements und der vorderen Streuplatte ist.

14. Durchlichtschirm, gemäß Anspruch 1, der des Weiteren eine antistatische Schicht (32), die auf der Lichteinfallsseite des Fresnel-Linsenflächenelements (1, 4) und der Lichtabstrahlseite der Streuplatte (3) angeordnet ist, und
eine Vergütungsschicht (33) umfasst, die auf allen Oberflächen der antistatischen Schicht (32), der Lichtabstrahlseite des Fresnel-Linsenflächenelements (1, 4), der Lichteinfallsseite der Streuplatte (3), und sowohl der Lichteinfallsseite als auch der Lichtabstrahlseite des linsenförmigen Linsenflächenelements (2) angeordnet ist.

15. Durchlichtschirm, gemäß Anspruch 14, bei dem die Vergütungsschicht (33) einen Brechungsindex aufweist, der niedriger als der jeweils des Fresnel-Linsenflächenelements, des linsenförmigen Linsenflächenelements und der vorderen Streuplatte ist und die Beziehung erfüllt, die durch d < λ/(4n) ausgedrückt ist (worin d: Dicke der Vergütungsschicht, λ: Lichtwellenlänge, n: Brechungsindizes des Fresnel-Linsenflächenelements, des linsenförmigen Linsenflächenelements und der Streuplatte).

16. Verfahren zur Herstellung eines Durchlichtschirms, das die Schritte umfasst:
(a) Herstellen eines transparenten Fresnel-Linsenflächenelements (1, 4);
(b) Herstellen eines transparenten, linsenförmigen Linsenflächenelements (2);
(c) Herstellen einer vorderen Streuplatte (3) mit den Schritten:
(1) Herstellen einer transparenten Platte (10);
(2) Anordnen einer Streuschicht (9) auf der Oberfläche der Eintrittsseite der transparenten Platte (10), indem darauf eine Mischung aus einem Binder und einem feinen, körnigen Lichtstreumaterial (8) mittels eines Verfahrens aufgebracht wird, das aus Drucken, Übertragen, Beschichten und Aufstreichen ausgewählt ist; und
(d) zum Zusammenbau Übereinanderschichten des Fresnel-Linsenflächenelements (1, 4), des transparenten, linsenförmigen Linsenflächenelements (2) und der Streuplatte (3), wobei die Austrittsfläche der Streuplatte (3) flach ist.

17. Verfahren zur Herstellung eines Durchlichtschirms gemäß Anspruch 16, wobei der Schritt zur Herstellung einer vorderen Streuplatte (3) die Schritte umfasst
die Streuschicht (9), die durch Strangformen einer Mischung aus dem Streumaterial (8) und einem ersten, transparenten Kunstharz erzeugt wird, und ein transparentes Kunstharzflächenelement, das durch Strangformen eines zweiten, transparenten Kunstharzes erzeugt wurde, zu einer Einheit zusammenzufügen.

18. Verfahren zur Herstellung eines Durchlichtschirms gemäß Anspruch 17, wobei der Schritt (c) des Weiteren die Schritte umfasst:
(1) Herstellen der Streuschicht durch Strangformen einer Mischung aus dem Streumaterial und ersten, transparenten Kunstharz;
(2) Herstellen einer transparenten Schicht durch Strangformen des zweiten, transparenten Kunstharzes; und
(3) Herstellen der vorderen Streuplatte, indem die Streuschicht und die transparente Schicht zu einer Einheit zusammengefügt werden.

19. Verfahren zur Herstellung eines Durchlichtschirms gemäß Anspruch 17, wobei der Schritt (c) des Weiteren die Schritte umfasst:
(1) Herstellen einer Streuschicht als Dünnflächenelement durch Strangformen einer Mischung aus dem Streumaterial und dem ersten, transparenten Kunstharz; und
(2) Herstellen der vorderen Streuplatte, indem zuerst das zweite, transparente Kunstharz nach dem Strangformen auf der Oberfläche der Streuschicht als Dünnflächenelement angeordnet wird, und dann die Streuschicht und die transparente Schicht zu einer Einheit zusammengesetzt werden.

## Revendications

1. Ecran de projection à transmission de lumière comprenant, dans l'ordre, le long du trajet du rayonnement :
une plaque transparente à lentilles de Fresnel (1,4);
une plaque transparente à lentilles lenticulaires (2), et
un panneau diffuseur avant (3),
ledit panneau diffuseur avant (3) comprenant une couche diffusante (9) et une couche transparente (10),
la couche diffusante (9) comprenant le matériau annulaire fin (8) diffusant la lumière et étant disposé sur le côté d'entrée du panneau diffuseur (3),
la surface de sortie du panneau diffuseur (3) étant plane.

2. Ecran de projection à transmission de lumière selon la revendication 1, dans lequel la vitesse de diffusion est formée par une répartition uniforme dudit matériau diffusant sur une épaisseur égale environ au diamètre d'une particule contenue dans ledit matériau diffusant.

3. Ecran de projection à transmission de lumière selon la revendication 1, dans lequel ledit matériau diffusant est caractérisé en ce qu'il comporte des particules ayant un diamètre d'une taille moyenne d'environ 5 mm, la distribution des tailles des particules s'étageant entre environ 1 et 10 µm.

4. Ecran de projection à transmission de lumière selon la revendication 1, dans lequel ledit matériau diffusant est formé par un liant et un matériau granulaire fin de diffusion ayant des propriétés de diffusion de la lumière.

5. Ecran de projection à transmission de lumière selon la revendication 1, dans lequel un matériau facilitant la diffusion est formé d'une résine transparente et d'un matériau diffusant granulaire fin ayant des propriétés de diffusion de la lumière.

6. Ecran de projection à transmission de lumière selon la revendication 1, dans lequel ladite couche de diffusion contient un matériau diffusant granulaire fin qui diffuse la lumière et dont chaque particule respective est transparente et a un diamètre d'environ 0,1 à 50 µm et une épaisseur d'environ 0,1 à 200 µm.

7. Ecran de projection à transmission de lumière selon la revendication 1, dans lequel la surface principale sur le côté de sortie de la lumière de ladite couche transparente est une surface choisie parmi une surface ayant la planéité d'un miroir et une surface non uniforme.

8. Ecran de projection à transmission de lumière selon la revendication 1, dans lequel ladite couche diffusante contient un matériau diffusant, dont la surface est colorée par un pigment coloré.

9. Ecran de projection à transmission de lumière selon la revendication 1, dans lequel au moins une couche choisie parmi ladite couche diffusante et ladite couche transparente contient en outre un matériau choisi parmi un matériau noir, qui possède un spectre presque uniforme d'absorption de lumière dans la gamme des longueurs d'onde du spectre visible, et un matériau d'absorption de la lumière visible ayant des caractéristiques sélectives.

10. Ecran de projection à transmission de lumière selon la revendication 1, comportant en outre des moyens antistatiques (32) disposés sur la surface, située sur le côté d'incidence de la lumière, de ladite plaque à lentille de Fresnel (1,4) et la surface, située du côté de sortie de la lumière, dudit panneau diffuseur (3).

11. Ecran de projection à transmission de lumière selon la revendication 10, dans lequel lesdits moyens antistatiques sont formés par un film mince contenant de fines particules d'oxyde d'étain avec une taille de particules correspondant à un diamètre d'environ 0,05 à 0,5 µm et présentant une résistance superficielle d'environ 10¹⁰ ohms et moins.

12. Ecran de projection à transmission de lumière selon la revendication 1, comprenant en outre des moyens antiréfléchissants (33) disposés sur la surface d'au moins l'un des éléments choisis dans le groupe formé par ladite plaque à lentilles de Fresnel (1,4), ladite plaque à lentilles lenticulaires (2) et ledit panneau diffuseur (3).

13. Ecran de projection à transmission de lumière selon la revendication 12, dans lequel lesdits moyens antiréfléchissants possèdent un indice de réfraction qui est inférieur à celui de n'importe lequel des éléments constitués par ladite plaque à lentilles de Fresnel, ladite plaque à lentilles lenticulaires et ledit panneau diffuseur.

14. Ecran de projection à transmission de lumière selon la revendication 1, comprenant en outre :
un film antistatique (32) disposé sur le côté d'incidence de la lumière de ladite plaque à lentilles de Fresnel (1,4) et sur le côté de sortie de la lumière dudit panneau diffuseur (3), et
un film antiréfléchissant (33) disposé sur toutes les surfaces dudit film antistatique (32), du côté de sortie de la lumière de ladite plaque à lentilles de Fresnel (1,4), du côté d'incidence de la lumière dudit panneau diffuseur (3) et à la fois sur le côté d'incidence de la lumière et sur le côté de sortie de lumière de ladite plaque à lentilles lenticulaires (2).

15. Ecran de projection à transmission de lumière selon la revendication 14, dans lequel le film antiréfléchissant (33) possède un indice de réfraction qui est inférieur à celui de n'importe lequel des éléments comprenant ladite plaque à lentilles de Fresnel, ladite plaque à lentilles lenticulaires et ledit panneau de diffusion avant, et satisfait à la relation exprimée par d < λ/(4n) (avec d : épaisseur dudit film antiréfléchissant, λ longueur d'onde de la lumière, n : indices de réfraction de ladite plaque à lentilles de Fresnel, de ladite plaque à lentilles lenticulaires et dudit panneau diffuseur).

16. Procédé de fabrication d'un écran de projection à transmission de lumière comprenant les étapes consistant à :
(a) fabriquer une plaque transparente à lentilles de Fresnel (1,4);
(b) fabriquer une plaque transparente à lentilles lenticulaires (2);
(c) fabriquer un panneau de diffuseur avant (3), incluant les étapes consistant à :
(1) fabriquer une plaque transparente (10);
(2) disposer une couche diffusante (9) sur la surface du côté entrée de ladite plaque transparente (10) en lui appliquant un mélange d'un liant et d'un fin matériau granulaire (8) diffusant la lumière au moyen d'un procédé choisi parmi l'impression, le transfert, l'enduction et le peinturage; et
(d) empiler sous la forme d'un ensemble ladite plaque à lentilles de Fresnel (1,4), ladite plaque transparente à lentilles lenticulaires (2) et ledit panneau diffuseur (3), la surface de sortie du panneau diffuseur (3) étant plane.

17. Procédé de fabrication d'un écran de projection à transmission de lumière selon la revendication 16, selon lequel ladite étape de fabrication du panneau diffuseur avant (30) comprend les étapes consistant à :
réunir pour les intégrer la couche de diffusion (9), qui a été formée par moulage par extrusion d'un mélange du matériau diffusant (8), et d'une première résine transparente, et une feuille de résine transparente, qui a été fabriquée par moulage par extrusion d'une seconde résine transparente.

18. Procédé de fabrication d'un écran de projection à transmission de lumière selon la revendication 17, selon lequel ladite étape (c) comprend en outre les étapes consistant à :
(1) fabriquer ladite couche de diffusion par moulage par extrusion d'un mélange dudit matériau diffusant et de ladite première résine transparente;
(2) fabriquer ladite couche transparente par moulage par extrusion de ladite seconde résine transparente; et
(3) fabriquer ledit panneau diffuseur avant en réunissant, pour les intégrer, ladite couche diffusante et ladite couche transparente.

19. Procédé pour fabriquer un écran de projection à transmission de lumière selon la revendication 17, selon lequel ladite étape (c) comprend en outre les étapes consistant à :
(1) fabriquer une couche diffusante sous la forme d'une feuille de film par moulage par extrusion d'un mélange formé dudit matériau de diffusion et de ladite première résine transparente; et
(2) fabriquer ledit panneau diffuseur avant en disposant tout d'abord ladite seconde résine transparente par moulage par extrusion sur la surface de ladite couche diffusante sous la forme d'une feuille de film, puis réunir, pour les intégrer, ladite couche diffusante et ladite couche transparente.
